# EUROPÄISCHE PATENTSCHRIFT

(11) **EP 2 338 130 B1**
(45) Veröffentlichungstag und Bekanntmachung des Hinweises auf die Patenterteilung: **02.04.2014**
(21) Anmeldenummer: 09782416.3
(22) Anmeldetag: 01.09.2009
(51) Int. Cl.: G06K 9/26, G06K 9/22

(54) **VERFAHREN ZUR AUTOMATISCHEN OPTISCHEN ZEICHENERFASSUNG, COMPUTERPROGRAMMPRODUKT, DATENVERARBEITUNSSYSTEM UND SCANNER**
METHOD FOR AUTOMATIC OPTICAL CHARACTER RECOGNITION, COMPUTER PROGRAM PRODUCT, DATA PROCESSING SYSTEM, AND SCANNER
PROCÉDÉ POUR LA RECONNAISSANCE OPTIQUE AUTOMATIQUE DE CARACTÈRES, PRODUIT-PROGRAMME INFORMATIQUE, SYSTÈME INFORMATIQUE ET NUMÉRISEUR

(30) Priorität: 15.09.2008 DE 102008042080
(43) Veröffentlichungstag der Anmeldung: 29.06.2011
(73) Patentinhaber: Bundesdruckerei GmbH, 10958 Berlin (DE)
(72) Erfinder: ALHEIT, Reimund, 16775 Stechlin-Menz (DE); KESSLER, Horst, 14193 Berlin (DE); SPRENGER, Martin, 10967 Berlin (DE); KRAMER, Christian, 13359 Berlin (DE); DIETRICH, Jürgen, 12557 Berlin (DE)
(74) Vertreter: Richardt Patentanwälte GbR
(86) Internationale Anmeldenummer: PCT/EP2009/061229
(87) Internationale Veröffentlichungsnummer: WO 2010/028973

(56) Entgegenhaltungen:
- EP-A2- 0 279 655
- US-A- 5 091 968
- US-A- 5 999 666
- US-B1- 6 965 703
- Mullot R (Ed.): "Les Documents Écrits: de la numérisation ã l'indexation par le contenu", 2006, Lavoisier, Paris ISBN: 2-7462-1143-2 * page 57, paragraph 2 * * page 194, last paragraph - page 195, paragraph 1 *
- Szeliski R.: "Computer Vision: Algorithms and Applications", 2011, Springer, Berlin ISBN: 978-1-84882-935-0 pages 5-6, * page 5, line 7 - line 8 * * figure 1.4a *

## Beschreibung

Die Erfindung betrifft ein Verfahren zur automatischen optischen Zeichenerfassung, ein Computerprogrammprodukt, ein Datenverarbeitungssystem sowie einen optischen Scanner.

Aus dem Stand der Technik sind Handscanner bekannt, bei denen mit Hilfe einer Zeilenkamera ein Dokument eingescannt wird. Als Zeilenkamera bezeichnet man einen digitalen Kameratyp, der keinen zweidimensionalen Sensor besitzt, sondern nur eine einzelne Sensorzeile. Die Bilddaten werden hierbei durch eine unkontrollierte Relativbewegung des Dokuments zur Kamera erfasst. Ein besonderer Vorteil bei der Verwendung eines Scanners mit einer Zeilenkamera ist, dass die optisch wirksame Fläche einer Zeilenkamera wesentlich kleiner als die von Matrix- oder Flächenkameras ist, wodurch die Wahrscheinlichkeit von Verunreinigungen, zum Beispiel durch Staupartikel, geringer ist und kostengünstig sehr hohe Auflösungen realisiert werden können. Eine Zeilenkamera kann insbesondere als sogenannter Contact Image Sensor (CIS) ausgeführt sein.

Ein Nachteil beim Einscannen eines Dokuments mit Hilfe einer Zeilenkamera ist allerdings, dass der Vorschub des Dokuments relativ zu der Zeilenkamera asynchron zu der Abtastfrequenz der Zeilenkamera erfolgt, da die Relativbewegung manuell, d.h. unkontrolliert, erfolgt. Hierdurch kommt es zu Verzerrungen der erfassten Bilddaten.

Zur Lösung dieses Problems ist es beispielsweise aus US 6,064,779, US 6,608,297 B2 und US 6,619,551 B2 bekannt, die Relativbewegung des Dokuments zur Zeilenkamera durch einen mechanischen Sensor, wie zum Beispiel ein Rad oder eine Rolle, zu erfassen. Die US 5,023,922 und US 2004/0165224 A1 schlagen dagegen eine Erfassung dieser Relativbewegung mit Hilfe eines optischen Sensors vor. Auf der Basis der mechanisch oder optisch erfassten Relativbewegung des Dokuments zu der Zeilenkamera wird dann eine Entzerrung der Bilddaten durchgeführt.

Aus der US 7,204,416 B1 ist es ferner bekannt, eine Entzerrung der durch eine Zeilenkamera aufgenommenen Bilddaten mit Hilfe vektorbasierter Mustererkennung vorzunehmen. Dies ist allerdings mit einem ganz erheblichen Datenverarbeitungsaufwand verbunden.

Aus der US 6,965,703 B1 ist ferner ein Verfahren zur Entzerrung der mit Hilfe einer Zeilenkamera aufgenommenen Bilddaten bekannt, bei dem die einzelnen Buchstaben des eingescannten Textes oder kurze Buchstabenfolgen des eingescannten Textes entzerrt werden. Auch dieses Verfahren ist bezüglich des dafür erforderlichen Datenverarbeitungsaufwandes nachteilig.

Aus US 6,965,703 B1 ist ein optischer Handscanner mit Zeichenerkennung bekannt, bei dem die durch das Einscannen erfassten Bilddaten einer Entzerrung unterzogen werden, bevor die Zeichenerkennung erfolgt. Die Entzerrung bedient sich dabei einer a priori-Information bezüglich der Zeichenhöhe und des Seitenverhältnisses des Zeichensatzes ("font ratio"), um die Bilddaten zu entzerren.

Aus der US 5,999,666 ist ein ähnlicher Handscanner bekannt, der neben einer Zeilenkamera ein weiteres diskretes Detektorelement aufweist, um Charakteristika des verwendeten Zeichensatzes zu ermitteln, und um so das Bild möglichst perfekt zu entzerren, bevor anschließend dann die Zeichenerkennung durchgeführt wird (vgl. Spalte 4, Zeilen 21 - 25 sowie Spalte 4, Zeilen 46 - 50 und Spalte 8, Zeilen 17 - 27).

Die EP 0 279 655 betrifft ein OCR-System zur Verbesserung der Erkennung einzelner Zeichen (vergleiche Patentanspruch 1 auf Seite 23). Ein globaler Vertrauenswert wird gemäß diesem Verfahren nicht ermittelt und dient auch nicht zur Durchführung eines Optimierungsverfahrens zur iterativen Änderung eines Bewegungsprofils.

Der Erfindung liegt demgegenüber die Aufgabe zugrunde, ein verbessertes Verfahren zur automatischen optischen Zeichenerfassung mittels einer Zeilenkamera, ein entsprechendes Computerprogrammprodukt, ein Datenverarbeitungssystem sowie einen Scanner zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur automatischen optischen Zeichenerfassung von einem Dokument geschaffen.

Bei dem Dokument kann es sich zum Beispiel um eine Visitenkarte oder ein Wertoder Sicherheitsdokument, wie zum Beispiel ein ID-Dokument, d. h. ein Ausweisdokument, wie zum Beispiel einen Personalausweis, Reisepass, Führerschein oder Firmenausweis, oder ein Zahlungsmittel, wie zum Beispiel eine Banknote, eine Kreditkarte, oder einen sonstigen Berechtigungsnachweis, wie zum Beispiel eine Eintrittskarte, einen Frachtbrief, ein Visum oder dergleichen handeln. Das Dokument kann papier- und/oder kunststoffbasiert ausgebildet sein. Insbesondere kann das

Dokument buchartig oder kartenförmig ausgebildet sein. Ferner kann es sich bei dem Dokument um eine Chipkarte handeln.

Das Dokument kann einseitig oder beidseitig vollflächig eingescannt werden. Es kann auch nur ein Teilbereich des Dokuments eingescannt werden, der die optisch zu erfassenden Zeichen trägt. Im Falle eines maschinenlesbaren Ausweisdokuments (Machine Readable Travel Document - MRTD) kann es sich bei diesem Teilbereich um die sogenannte maschinenlesbare Zone (Machine Readable Zone - MRZ) handeln. Die MRZ kann den Spezifikationen der internationalen Luftfahrtbehörde (ICAO) entsprechend ausgeführt sein.

Das Einscannen zumindest eines Teilbereichs des Dokuments erfolgt mittels einer Zeilenkamera, wobei eine unkontrollierte Relativbewegung des Dokuments zu der Zeilenkamera durchgeführt wird. Es kann also beispielsweise die Zeilenkamera stationär sein, sodass das Dokument manuell an der Zeilenkamera vorbeigeführt wird oder das Dokument kann stationär sein, indem es zum Beispiel auf eine Unterlage gelegt wird, und es wird dann die Zeilenkamera an dem Dokument vorbeigeführt. Ferner ist es auch möglich, dass ein Benutzer das Dokument in der einen und die Zeilenkamera in der anderen Hand hält, sodass beim Einscannen sowohl das Dokument als auch die Zeilenkamera bewegt werden.

Die Relativbewegung des Dokuments zu der Zeilenkamera ist unkontrolliert, d.h. es findet keine Synchronisierung der Relativbewegung mit der Abtastfrequenz der Zeilenkamera statt. Das Bewegungsprofil der unkontrollierten Relativbewegung kann also allein davon abhängig sein, wie ein Benutzer das Dokument und die Zeilenkamera relativ zueinander bewegt, um den Teilbereich einzuscannen.

Da die Relativbewegung des Dokuments zur Zeilenkamera bei dem Einscannvorgang asynchron zu der Abtastfrequenz der Zeilenkamera ist, werden die Bilddaten mehr oder weniger verzerrt. Eine Entzerrung der Bilddaten erfolgt mit Hilfe eines vorgegebenen Bewegungsprofils. Beispielsweise werden Bewegungsprofile der Relativbewegung des Dokuments zur Zeilenkamera für verschiedene Benutzer erfasst. Aus diesen Bewegungsprofilen wird ein mittleres typisches Bewegungsprofil ermittelt. Ein solches typisches Bewegungsprofil wird dann als vorgegebenes Bewegungsprofil definiert, mit Hilfe dessen eine erste Entzerrung der Bilddaten stattfindet.

Das vorgegebene Bewegungsprofil kann auch in Abhängigkeit von der Anordnung der Zeilenkamera relativ zu dem Dokument gewählt werden. Wenn die Relativbewegung zum Einscannen in vertikaler Richtung von oben nach unten erfolgt, so kann angenommen werden, dass die dabei ausgeführte Relativbewegung in etwa der eines freien Falls in etwa mit der Erdbeschleunigung entspricht. Wenn dagegen die Relativbewegung des Dokuments zur Zeilenkamera in einer horizontalen Richtung verläuft, so kann angenommen werden, dass die Relativbewegung in etwa eine konstante Geschwindigkeit hat. In diesem Fall kann das vorgegebene Bewegungsprofil eine konstante Geschwindigkeit haben.

Unter einem "Bewegungsprofil" wird hier eine Beschreibung der Relativbewegung des Dokuments zu der Zeilenkamera verstanden. Beispielsweise kann es sich bei dem Bewegungsprofil um die Position der Zeilenkamera relativ zu dem Dokument in Abhängigkeit von der Zeit während des Einscannvorgangs handeln.

Bei einem Bewegungsprofil mit konstanter Beschleunigung kann das Bewegungsprofil mit einem einzigen Bewegungsprofilparameter, nämlich der konstanten Beschleunigung, beschrieben werden, wenn man davon ausgeht, dass die Geschwindigkeit zum Zeitpunkt T₀, d.h. zu Beginn des Einscannvorgangs, gleich Null ist. Der Beginn des Einscannvorgangs kann z.B. durch einen mechanischen oder optischen Sensor erfasst werden, der an dem Scanner 100 angeordnet sein kann, um zu sensieren, wenn die Unterkante des Dokuments 122 an der Zeilenkamera vorbei gezogen wird. Der Beginn des Einscannvorgangs kann aber auch ohne einen solchen zusätzlichen Sensor sensiert werden, indem hierzu die von der Zeilenkamera gelieferten Bilddaten laufend von dem Prozessor 113 überwacht werden.

Ebenso verhält es sich, wenn ein vorgegebenes Bewegungsprofil konstanter Geschwindigkeit verwendet wird. In diesem Fall reicht als Bewegungsprofilparameter ein Geschwindigkeitswert aus. Das Bewegungsprofil kann aber auch als Kurve hinterlegt sein, insbesondere wenn es sich bei dem Bewegungsprofil um ein empirisch ermitteltes typisches Bewegungsprofil handelt.

Nach der Entzerrung der Bilddaten wird eine Zeichenerkennung auf der Basis der entzerrten Bilddaten durchgeführt. Bei der Zeichenerkennung kann es sich um eine sogenannte Texterkennung handeln, die auch als optische Zeichenerkennung (Optical Character Recognition - OCR) bezeichnet wird. Für die Zeichenerkennung kann auch ein Intelligent Character Recognition (ICR)-Verfahren verwendet werden, bei dem der Kontext mit in die optische Zeichenerkennung eingeht.

Für die aus den entzerrten Bilddaten erkannten Zeichen wird ein globaler Vertrauenswert ausgegeben. Dieser globale Vertrauenswert ist ein Maß für die Zuverlässigkeit der Zeichenerkennung, und zwar bezogen auf die in den entzerrten Bilddaten insgesamt erkannten Zeichen und nicht bezogen auf ein einzelnes Zeichen. Bei dem globalen Vertrauenswert handelt es sich also um einen einzigen Wert für sämtliche aus den entzerrten Bilddaten erkannten Zeichen. Bei dem globalen Vertrauenswert kann es sich zum Beispiel um eine Prozentangabe zwischen 0 und 100 % handeln, wobei bei einem globalen Vertrauenswert von 0 % die erkannten Zeichen Zufallswerte sind und bei einem globalen Vertrauenswert von 100 % absolute Sicherheit hinsichtlich der Korrektheit der Erkennung der Zeichen vorliegt. Ein solcher Vertrauenswert wird auch als "Score" bezeichnet, vgl. hierzu zum Beispiel US 5,048,097 und US 7,280,684 B2.

Nachfolgend wird das Bewegungsprofil ausgehend von dem vorgegebenen Bewegungsprofil iterativ geändert, wobei bei jeder Iteration erneut eine Entzerrung der Bilddaten und die Zeichenerkennung durchgeführt wird. Die Änderung des Bewegungsprofils erfolgt nach einem Optimierungsverfahren, wobei der globale Vertrauenswert, den die Zeichenerkennung in jeder Iteration liefert, als Bewertungsfunktion verwendet wird.

Nach Durchführung des Optimierungsverfahrens werden die mit Hilfe des dann vorliegenden Bewegungsprofils erkannten Zeichen ausgegeben.

Ausführungsformen des erfindungsgemäßen Verfahrens sind besonders vorteilhaft, da einerseits keine mechanische oder optische Erfassung der unkontrollierten Relativbewegung des Dokuments zu der Zeilenkamera durchgeführt werden muss, und andererseits der Datenverarbeitungsaufwand für die Entzerrung der Bilddaten relativ gering ist.

Nach einer Ausführungsform der Erfindung kann die Zeichenerkennung dadurch weiter verbessert werden, dass das Dokument bzw. der eingescannte Teilbereich des Dokuments in Abschnitte aufgeteilt wird. Dies kann zum Beispiel nach einem vorgegebenen Raster erfolgen.

Ausgangspunkt für die weitere Verbesserung der Zeichenerkennung ist das aufgrund des Optimierungsverfahrens ermittelte geänderte Bewegungsprofil. Das Optimierungsverfahren wird dann auf die einzelnen Abschnitte der Bilddaten angewendet, wobei anstelle des globalen Vertrauenswerts ein lokaler Vertrauenswert verwendet wird, den die Zeichenerkennung für den jeweils bearbeiteten Abschnitt liefert. Der lokale Vertrauenswert wird also genau so wie der globale Vertrauenswert von der Zeichenerkennung ermittelt, mit dem Unterschied, dass sich der lokale Vertrauenswert nur auf die Zuverlässigkeit der korrekten Zeichenerkennung innerhalb eines der Abschnitte bezieht. Das Optimierungsverfahren wird also abschnittsweise angewendet, um das Bewegungsprofil abschnittsweise zu verändern, sodass der lokale Vertrauenswert der Zeichenerkennung eines jeden der Abschnitte maximiert wird.

Nach einer Ausführungsform der Erfindung werden zumindest erste und zweite Bewegungsprofile vorgegeben. Nach dem Einscannen zumindest des Teilbereichs des Dokuments wird eine erste Entzerrung der Bilddaten mit Hilfe des ersten vorgegebenen Bewegungsprofils durchgeführt sowie eine zweite Entzerrung der Bilddaten mit Hilfe des zweiten vorgegebenen Bewegungsprofils. Wenn ein oder mehrere weitere Bewegungsprofile vorgegeben sind, so werden entsprechend weitere Versionen von entzerrten Bilddaten generiert.

Aus den entzerrten Bilddaten werden dann jeweils die Zeichen mittels OCR erkannt und es wird für jede Version der entzerrten Bilddaten ein globaler Vertrauenswert ausgegeben. Es wird dann dasjenige der zumindest ersten und zweiten Bewegungsprofile ausgewählt, welches zu einer Zeichenerkennung mit einem maximalen globalen Vertrauenswert geführt hat. Dieses aus den zumindest ersten und zweiten Bewegungsprofilen ausgewählte Bewegungsprofil dient als Ausgangspunkt für die iterative Änderung des Bewegungsprofils nach dem Optimierungsverfahren zur Maximierung des globalen Vertrauenswerts.

Beispielsweise kann es sich bei dem ersten Bewegungsprofil um ein Bewegungsprofil einer konstanten Beschleunigung handeln. Insbesondere kann die konstante Beschleunigung in etwa gleich der Erdbeschleunigung g sein. Bei dem zweiten Bewegungsprofil kann es sich dagegen um ein Bewegungsprofil einer konstanten Geschwindigkeit handeln.

Wenn beispielsweise die Zeilenkamera stationär ist und die Benutzer die einzuscannenden Dokumente manuell an der Zeilenkamera vertikal von oben nach unten vorbeiführen müssen, so lassen sich überraschenderweise die Benutzer in zwei Gruppen einteilen: Eine erste Gruppe von Benutzern lässt die Hand mit dem Dokument im Wesentlichen fallen, wenn das Dokument an der Zeilenkamera vorbeigeführt wird. Die zweite Gruppe von Benutzern bemüht sich dagegen, das Dokument mit annähernd konstanter Geschwindigkeit an der Zeilenkamera vorbeizuführen. Aufgrund dieses Nutzerverhaltens ist die Vorgabe der entsprechenden ersten und zweiten Bewegungsprofile besonders vorteilhaft, da dann eines dieser Bewegungsprofile bereits annähernd dem tatsächlichen Bewegungsprofil der unkontrollierten Relativbewegung des Dokuments zur Zeilenkamera bei dem Einscannvorgang entspricht. Das Optimierungsverfahren kommt dann mit einer geringeren Anzahl von Iterationen aus und liefert noch bessere Ergebnisse.

In einem weiteren Aspekt betrifft die Erfindung ein Computerprogrammprodukt mit ausführbaren Programminstruktionen zur Durchführung der folgenden Schritte: Eingabe von Bilddaten, die von zumindest einem Teilbereich eines Dokuments von einer Zeilenkamera durch Einscannen erfasst worden sind, Entzerrung der Bilddaten mit Hilfe eines vorgegebenen Bewegungsprofils einer Relativbewegung des Dokuments und der Zeilenkamera, Durchführung einer Zeichenerkennung in den entzerrten Bilddaten, wobei ein globaler Vertrauenswert für die Korrektheit der erkannten Zeichen ermittelt wird, iterative Änderung des Bewegungsprofils, wobei bei jeder Iteration die Entzerrung der Bilddaten mit dem geänderten Bewegungsprofil und die Zeichenerkennung durchgeführt wird, und wobei die iterative Änderung nach einem Optimierungsverfahren zur Maximierung des globalen Vertrauenswerts erfolgt.

In einem weiteren Aspekt betrifft die Erfindung ein Datenverarbeitungssystem mit Mitteln zur Eingabe von Bilddaten, die von zumindest einem Teilbereich eines Dokuments von einer Zeilenkamera durch Einscannen erfasst worden sind, Mitteln zur Entzerrung der Bilddaten mit Hilfe eines vorgegebenen Bewegungsprofils einer Relativbewegung des Dokuments und der Zeilenkamera, Mitteln zur Durchführung einer Zeichenerkennung in den entzerrten Bilddaten, wobei ein globaler Vertrauenswert für die Korrektheit der erkannten Zeichen ermittelt wird, Mitteln zur iterative Änderung des Bewegungsprofils, wobei bei jeder Iteration die Entzerrung der Bilddaten mit dem geänderten Bewegungsprofil und die Zeichenerkennung durchgeführt wird, und wobei die iterative Änderung nach einem Optimierungsverfahren zur Maximierung des globalen Vertrauenswerts erfolgt.

In einem weiteren Aspekt betrifft die Erfindung einen Scanner mit zur automatischen optischen Zeichenerfassung von einem Dokument mit: Mitteln zum Einscannen zumindest eines Teilbereichs des Dokuments, der Zeichen trägt, mittels einer Zeilenkamera, wobei eine unkontrollierte Relativbewegung des Dokuments und der Zeilenkamera durchgeführt wird, wodurch Bilddaten von zumindest dem Teilbereich erfasst werden, Mitteln zur Entzerrung der Bilddaten mit Hilfe eines vorgegebenen Bewegungsprofils einer Relativbewegung des Dokuments und der Zeilenkamera, Mitteln zur Durchführung einer Zeichenerkennung in den entzerrten Bilddaten, wobei ein globaler Vertrauenswert für die Korrektheit der erkannten Zeichen ermittelt wird, Mitteln zur iterativen Änderung des Bewegungsprofils, wobei bei jeder Iteration die Entzerrung der Bilddaten mit dem geänderten Bewegungsprofil und die Zeichenerkennung durchgeführt wird, und wobei die iterative Änderung nach einem Optimierungsverfahren zur Maximierung des globalen Vertrauenswerts erfolgt.

Nach einer Ausführungsform der Erfindung wird die gesamte Vorder- und/oder Rückseite des Dokuments eingescannt. Die iterative Ermittlung des geänderten Bewegungsprofils erfolgt aber nur auf der Basis der durch Einscannen erfassten Bilddaten eines Teilbereichs des Dokuments. Bei diesem Teilbereich kann es sich um die MRZ handeln. Nachdem das Bewegungsprofil für die Entzerrung durch Ausführung des Optimierungsverfahrens ermittelt worden ist, werden die gesamten eingescannten Bilddaten mit Hilfe dieses Bewegungsprofils entzerrt.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Scanners,
- Figur 2: ein Flussdiagramm einer Ausführungsform eines erfindungsgemäßen Verfahrens,
- Figur 3: ein Blockdiagramm einer Ausführungsform eines erfindungsgemäßen Datenverarbeitungssystems,
- Figur 4: ein Flussdiagramm einer Ausführungsform eines erfindungsgemäßen Verfahrens.

Elemente der nachfolgenden Ausführungsformen, die einander entsprechen, sind mit denselben Bezugszeichen gekennzeichnet.

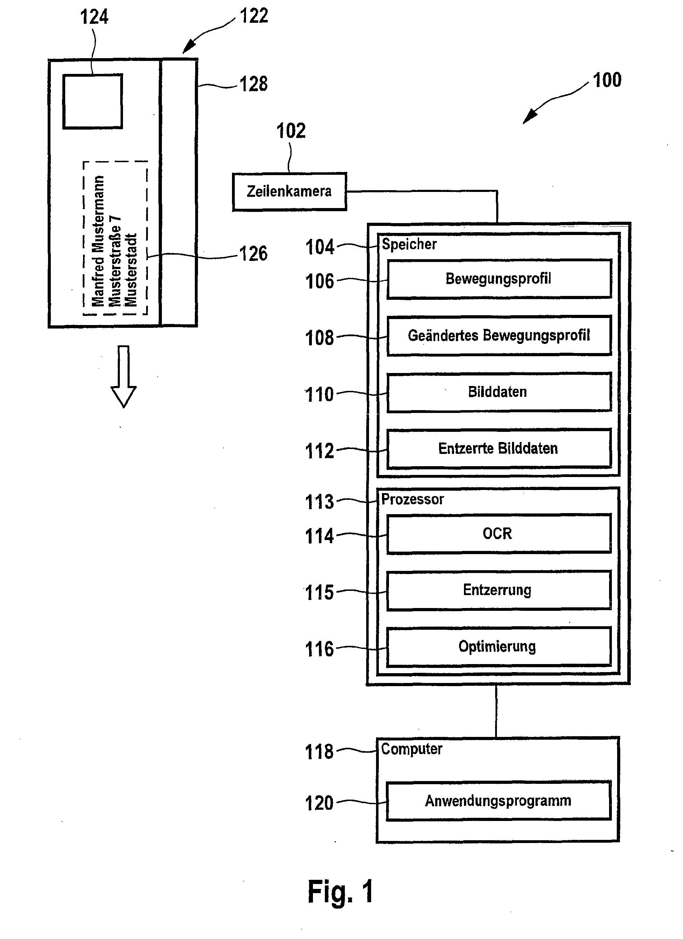

Die Figur 1 zeigt einen Scanner 100 mit einer Zeilenkamera 102. Der Scanner 100 hat einen elektronischen Speicher 104 zur Speicherung eines vorgegebenen Bewegungsprofils 106. Das vorgegebene Bewegungsprofil 106 kann die Position der Zeilenkamera relativ zu dem einzuscannenden Dokument in Abhängigkeit von der Zeit während der Einscannzeit angeben, zum Beispiel in Form einer digitalisierten Kurve oder einer parametrisierbaren Berechnungsvorschrift.

Bei einem Bewegungsprofil 106 konstanter Geschwindigkeit kann die Position der Zeilenkamera durch die Formel s = v · t gegeben sein, wobei s die Distanz der Zeilenkamera zu der Vorderkante des Dokuments ist, v die konstante Geschwindigkeit und t die seit Beginn des Einscannvorgangs vergangene Zeit.

Wenn man ein Bewegungsprofil 106 mit konstanter Beschleunigung vorgibt, lautet dagegen die Berechnungsvorschrift s = ½ a · t², wobei a die Beschleunigung ist. Beispielsweise kann die Beschleunigung gleich der Erdbeschleunigung sein.

Der Speicher 104 dient ferner zur Speicherung eines geänderten Bewegungsprofils 108 sowie der von der Zeilenkamera 102 erfassten Bilddaten 110. Der Speicher 104 dient ferner zur Speicherung entzerrter Bilddaten 112.

Der Scanner 100 hat einen Prozessor 113 zur Ausführung eines Programmmoduls 114 für die Durchführung einer OCR. Neben den durch die OCR erkannten Zeichen liefert das Programmmodul 114 einen einzelnen Vertrauenswert, welcher ein Maß für die Zuverlässigkeit der korrekten Erkennung sämtlicher der Zeichen aus den entzerrten Bilddaten 112 ist. Das Programmmodul 114 liefert also nicht für jedes erkannte Zeichen einen solchen Vertrauenswert, sondern nur einen einzigen Vertrauenswert, der sich auf die Korrektheit der aus den entzerrten Bilddaten 112 erkannten Zeichen insgesamt bezieht. Ein solcher Vertrauenswert kann zum Beispiel durch Mittelung der für jedes Zeichen ermittelten Vertrauenswerte von dem Programmmodul 114 gewonnen werden. Wenn die entzerrten Bilddaten 112 insgesamt einer OCR unterzogen werden, handelt sich bei dem Vertrauenswert um den globalen Vertrauenswert; wenn nur ein Abschnitt der Bilddaten 112 der OCR unterzogen wird dagegen um den lokalen Vertrauenswert.

Der Prozessor 113 des Scanners 100 dient ferner zur Ausführung eines Programmmoduls 115. Das Programmmodul 115 dient zur Entzerrung der Bilddaten 110 mit Hilfe des vorgegebenen Bewegungsprofils 106 bzw. mit Hilfe des geänderten Bewegungsprofils 108.

Der Prozessor 113 des Scanners 100 dient ferner zur Ausführung eines Programmmoduls 116, welches ein Optimierungsverfahren implementiert. Das Optimierungsverfahren dient zur Auffindung einer Lösung für das Optimierungsproblem der Änderung des vorgegebenen Bewegungsprofils 106 so, dass der Vertrauenswert, welcher von dem Programmmodul 114 aufgrund einer OCR der mit Hilfe des geänderten Bewegungsprofils entzerrten Bilddaten 112 ermittelt wird, maximiert wird. Bei dem Optimierungsverfahren kann es sich insbesondere um ein Approximationsverfahren handeln, welches dieses Optimierungsproblem näherungsweise löst.

Der Scanner 100 ist an einen Computer 118 angeschlossen, um die von dem Programmmodul 114 erkannten Zeichen an den Computer 118 zu übertragen. Dort werden die erkannten Zeichen zum Beispiel von einem Anwendungsprogramm 120 weiter verarbeitet.

Der Scanner 100 dient zum Beispiel zum Einscannen von Ausweisdokumenten, insbesondere eines Dokuments 122. Das Dokument 122 trägt zum Beispiel ein Passfoto 124 und hat ein Textfeld 126 mit Personalisierungsdaten. Ferner hat das Dokument 122 eine sogenannte MRZ 128, die optisch lesbare Zeichen trägt.

Mit Hilfe der Zeilenkamera 102 wird zum Beispiel die gesamte Vorderseite des Dokuments 122 oder nur die MRZ 128 eingescannt, indem das Dokument 122 von einem Benutzer manuell von oben nach unten an der Zeilenkamera 102 vorbei gezogen wird. Hierdurch werden von der Zeilenkamera 102 die Bilddaten 110 erfasst und in dem Speicher 104 gespeichert. Da die Relativbewegung des Dokuments 122 und der Zeilenkamera 102 während des Einscannvorgangs unkontrolliert ist, d.h. ohne eine Synchronisation der Fortbewegung des Dokuments 122 relativ zu der Zeilenkamera 102 mit der Wiederholfrequenz der Zeilenkamera 102 erfolgt, sind die so erfassten Bilddaten 110 mehr oder weniger verzerrt.

Für eine Entzerrung der Bilddaten 110 wird angenommen, dass die unkontrollierte Relativbewegung des Dokuments 122 zu der Zeilenkamera 102 während des Einscannvorgangs näherungsweise dem vorgegebenen Bewegungsprofil 106 entspricht. Das Programmmodul 115 wird zur Entzerrung der Bilddaten 110 gestartet. Dieses greift auf die Bilddaten 110 und das vorgegebene Bewegungsprofil 106 zu, entzerrt die Bilddaten 110 mit Hilfe des vorgegebenen Bewegungsprofils 106 und speichert die entzerrten Bilddaten 112 in dem Speicher 104 ab.

Daraufhin wird das Programmmodul 114 gestartet, welches auf die entzerrten Bilddaten 112 zugreift, um eine OCR durchzuführen. Wenn der dabei ermittelte globale Vertrauenswert bereits über einem Schwellwert liegt, so werden die Ergebnisse der OCR an den Computer 118 ausgegeben. Wenn dies hingegen nicht der Fall ist, wird das Programmmodul 116 gestartet, um das Optimierungsverfahren auszuführen. Hierzu wird das vorgegebene Bewegungsprofil 106 geändert, und das resultierende geänderte Bewegungsprofil 108 wird in dem Speicher 104 abgespeichert.

.Beispielsweise kann das vorgegebene Bewegungsprofil 106 um einen vorgegebenen Wert inkrementiert oder dekrementiert werden, beispielsweise indem der Bewegungsprofilparameter v bzw. a um den vorgegebenen Wert vergrößert oder verkleinert wird. Dann wird erneut die Ausführung des Programmmoduls 115 gestartet, um die Bilddaten 110 erneut mit Hilfe des geänderten Bewegungsprofils 108 zu entzerren. Die entzerrten Bilddaten 112 werden wiederum in den Speicher 104 geschrieben. Auf der Basis der so erhaltenen entzerrten Bilddaten 112 wird dann erneut mit Hilfe des Programmmoduls 114 eine OCR durchgeführt. Wenn der globale Vertrauenswert nun über dem Schwellwert liegt, so wird die Durchführung des Optimierungsverfahrens abgebrochen und die erkannten Zeichen werden an den Computer 118 ausgegeben. Liegt dagegen der globale Vertrauenswert noch immer unter dem vordefinierten Schwellwert, so werden eine oder mehrere weitere Iterationen durchgeführt, so lange bis der globale Vertrauenswert den Schwellwert erreicht oder eine Abbruchbedingung erfüllt ist, wie zum Beispiel eine maximale Anzahl von Iterationen.

Wenn mit der Zeilenkamera 102 zum Beispiel die gesamte Vorderseite des Dokuments 122 eingescannt wird, so kann in einer Ausführungsform der Erfindung so vorgegangen werden, dass für die Durchführung des Verfahrens" nur die eingescannten Bilddaten aus dem Bereich der MRZ verwendet werden. Nachdem das Bewegungsprofil iterativ geändert worden ist, bis der globale Vertrauenswert bezogen auf diese Bilddaten der MRZ den Schwellwert erreicht oder eine Abbruchbedingung erfüllt ist, so wird dieses geänderte Bewegungsprofil anschließend für die Entzerrung aller eingescannter Bilddaten, hier also der gesamten Vorderseite des Dokuments verwendet. Dies hat den Vorteil, dass eine Entzerrung nur auf der Basis der Bilddaten der MRZ weniger aufwändig sein kann, da hinsichtlich der MRZ a priori Informationen in die OCR eingehen können, z.B. die für die MRZ verwendeten Zeichen, Zeichenabstände oder andere von der ICAO spezifizierten Merkmale.

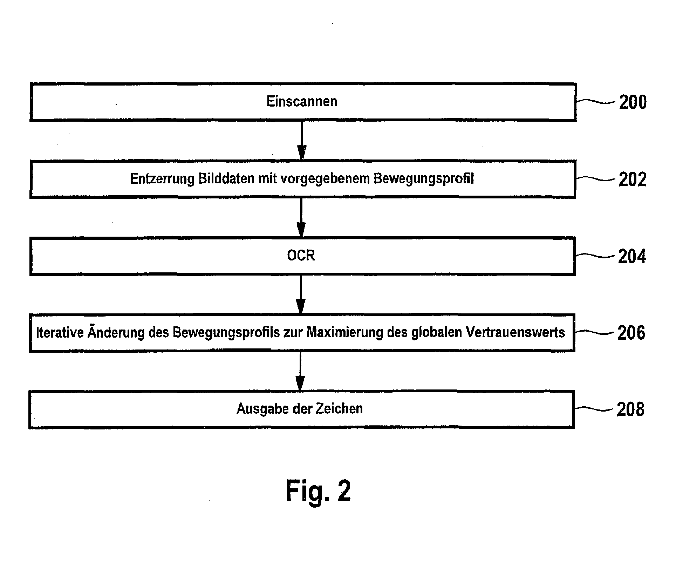

Die Figur 2 zeigt ein entsprechendes Verfahren. In dem Schritt 200 wird das Dokument mit Hilfe der Zeilenkamera eingescannt, wobei die Relativbewegung des Dokuments zu der Zeilenkamera unkontrolliert und ohne Synchronisation mit der Wiederholfrequenz der Zeilenkamera durchgeführt wird. In dem Schritt 202 werden die so erfassten Bilddaten mit Hilfe eines vorgegebenen Bewegungsprofils entzerrt. Bei diesem vorgegebenen Bewegungsprofil kann es sich zum Beispiel um ein empirisch ermitteltes typisches Bewegungsprofil handeln, welches in Form einer digitalisierten Weg-Zeitkurve in dem Scanner gespeichert ist. Das vorgegebene Bewegungsprofil kann auch als ein einziger Bewegungsprofilparameter, wie zum Beispiel eine konstante Geschwindigkeit v oder eine konstante Beschleunigung a, gespeichert sein.

In dem Schritt 204 wird eine OCR der entzerrten Bilddaten durchgeführt. Für den Fall, dass die OCR keinen hinreichend großen globalen Vertrauenswert hinsichtlich der erkannten Zeichen liefert, wird in dem Schritt 206 ein iteratives Optimierungsverfahren zur Maximierung des globalen Vertrauenswerts durchgeführt, wobei dies durch eine Änderung des Bewegungsprofils in jeder der Iterationen erfolgt. Eine Iteration beinhaltet also eine Änderung des aufgrund der vorhergehenden Iteration erhaltenen Bewegungsprofils, einer nachfolgenden Entzerrung der durch das Einscannen erfassten Bilddaten mit Hilfe des geänderten Bewegungsprofils dieser Iteration und eine OCR der so erhaltenen entzerrten Bilddaten mit Ausgabe des hierfür ermittelten globalen Vertrauenswerts.

In dem Schritt 208 werden dann nach Beendigung der Ausführung des Optimierungsverfahrens die erkannten Zeichen ausgegeben. Optional kann auch der für die erkannten Zeichen ermittelte globale Vertrauenswert ausgegeben werden.

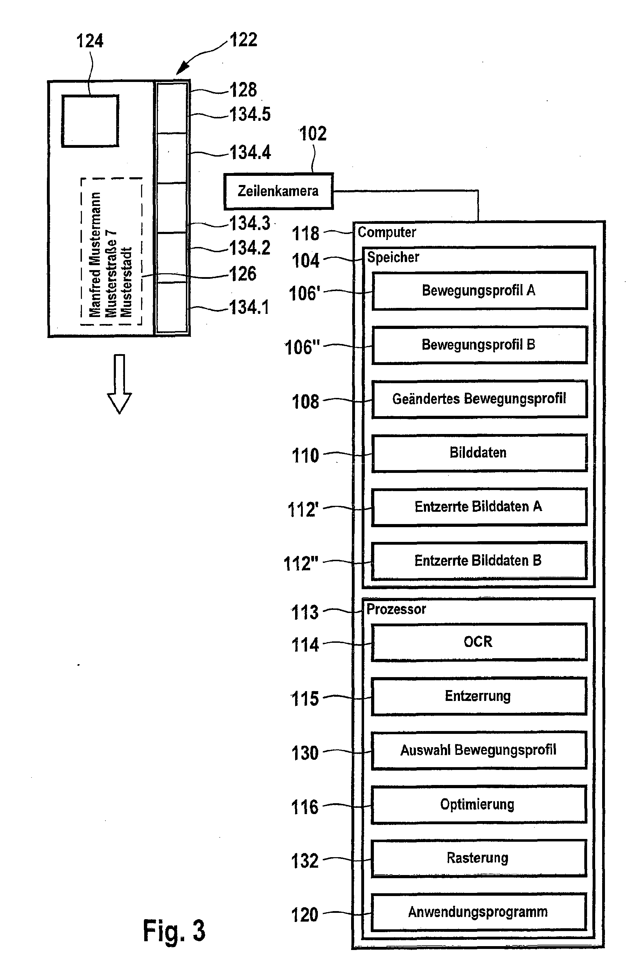

Die Figur 3 zeigt eine Ausführungsform des Computers 118, welche die Funktionalitäten des Scanners 100 der Ausführungsform der Figur 1 integriert. Die Zeilenkamera 102 ist also unmittelbar an den Computer 118 angeschlossen. Im Unterschied zu der Ausführungsform der Figur 1 sind in dem Speicher 104 zwei unterschiedliche vorgegebene Bewegungsprofile gespeichert, nämlich das Bewegungsprofil A 106' und das Bewegungsprofil B 106".

Von dem Programmmodul 115 werden dementsprechend entzerrte Bilddaten A 112' und entzerrte Bilddaten 112" generiert, und zwar auf der Basis des Bewegungsprofils A bzw. des Bewegungsprofils B.

Der Prozessor dient zur Ausführung eines Programmmoduls 130 zur Auswahl eines der Bewegungsprofile A und B als Ausgangspunkt für die Durchführung des Optimierungsverfahrens mittels des Programmmoduls 116. Ferner dient der Prozessor 113 zur Ausführung eines Programmmoduls 132 zur Unterteilung des Dokuments 122 in Abschnitte 134.1 bis 134.5 nach einem vorgegebenen Raster.

Zur automatischen optischen Zeichenerfassung der MRZ 128 von dem Dokument 122 wird wie folgt vorgegangen:
Die MRZ 128 wird an der Zeilenkamera 102 manuell und unkontrolliert vorbeigeführt, sodass die Zeilenkamera die Bilddaten 110 erfasst, welche in dem Speicher 104 abgespeichert werden.

Daraufhin wird das Programmmodul 115 gestartet, welches eine Entzerrung der Bilddaten mit Hilfe des Bewegungsprofils A durchführt. Die daraus resultierenden entzerrten Bilddaten A werden in dem Speicher 104 abgespeichert. Ferner wird eine zweite Entzerrung der Bilddaten 110 durchgeführt, und zwar anhand des Bewegungsprofils B. Die durch Ausführung des Programmmoduls 115 generierten entzerrten Bilddaten B werden ebenfalls in dem Speicher 104 gespeichert.

Anschließend wird das Programmmodul 114 gestartet, um eine OCR auf den entzerrten Bilddaten A und eine weitere OCR auf den entzerrten Bilddaten B durchzuführen. Für die OCR der entzerrten Bilddaten A wird ein globaler Vertrauenswert A und für die OCR der entzerrten Bilddaten B wird ein globaler Vertrauenswert B von dem Programmmodul 114 ausgegeben.

Das Programmmodul 130 vergleicht die globalen Vertrauenswerte A und B miteinander und wählt den größeren der beiden globalen Vertrauenswerte und damit auch eines der Bewegungsprofile A oder B aus. Wenn beispielsweise der globale Vertrauenswert A größer als der globale Vertrauenswert B ist, so wählt das Programmmodul 130 das Bewegungsprofil A aus. Im gegenteiligen Fall wählt das Programmmodul 130 das Bewegungsprofil B aus.

Das von dem Programmmoduls 130 ausgewählte Bewegungsprofil ist der Startwert für die anschließende Durchführung des Optimierungsverfahrens durch das Programmmodul 116. Das Programmmodul 116 ändert das ausgewählte Bewegungsprofil und speichert das geänderte Bewegungsprofil 118 im Speicher 104. Mit Hilfe des geänderten Bewegungsprofils 108 werden die Bilddaten 110 erneut entzerrt und eine OCR wird auf dieser Basis durchgeführt. Dieses Optimierungsverfahren wird iterativ so lange durchgeführt, bis der resultierende globale Vertrauenswert einen Schwellwert erreicht oder eine Abbruchbedingung erfüllt wird, wie dies auch bei der Ausführungsform der Figur 1 der Fall ist.

Für eine weitere Verbesserung der Qualität der optischen Zeichenerfassung kann anschließend eine Unterteilung des Dokuments 122 in Abschnitte 134 vorgenommen werden, wie dies in der Figur 3 dargestellt ist. Hierzu werden die Bilddaten 110 in entsprechende Bilddatenabschnitte unterteilt.

Für jeden der Abschnitte 134 gibt es also einen Bilddatenabschnitt, der die zu dem betreffenden Abschnitt 134 gehörenden Bilddaten beinhaltet.

Für jeden der Bilddatenabschnitte wird dann das Optimierungsverfahren mit Hilfe des Programmmoduls 116 durchgeführt, und zwar ausgehend von dem durch die vorherige Durchführung des Optimierungsverfahrens bezüglich der Bilddaten 110 erhaltenen geänderten Bewegungsprofils 108. Für die Durchführung des Optimierungsverfahrens beispielsweise für den Abschnitt 134.1 wird also der erste Bilddatenabschnitt der Bilddaten 110 sowie der entsprechende erste Abschnitt des geänderten Bewegungsprofils 108 verwendet. Dieser Abschnitt des geänderten Bewegungsprofils 108 wird weiter optimiert, um den lokalen Vertrauenswert der OCR für diesen Abschnitt 134.1 zu optimieren. Analog wird für jeden der Abschnitte 134 vorgegangen. Nach Durchführung des Optimierungsverfahrens für jeden der Abschnitte 134 werden dann die so erkannten Zeichen in das Anwendungsprogramm 120 für eine Weiterverarbeitung eingegeben.

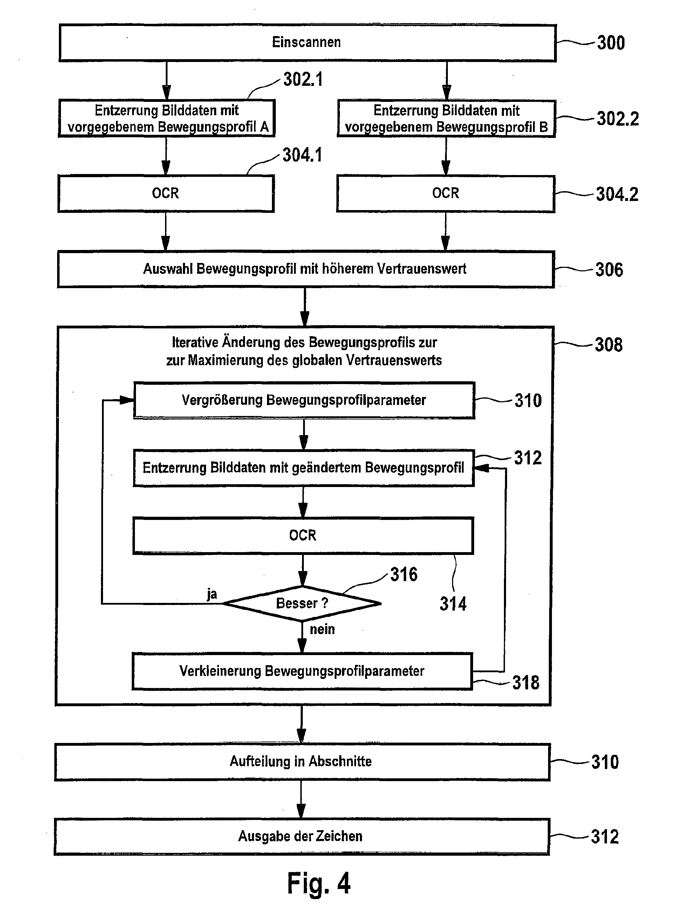

Die Figur 4 zeigt ein entsprechendes Flussdiagramm.

In dem Schritt 300 wird zumindest ein Teilbereich des Dokuments mit Hilfe der Zeilenkamera eingescannt. In dem Schritt 302.1 werden die so erfassten Bilddaten mit dem vorgegebenen Bewegungsprofil A entzerrt und in dem Schritt 304.1 wird eine OCR auf der Basis der mithilfe des Bewegungsprofils A entzerrten Bilddaten durchgeführt und ein globaler Vertrauenswert A hierfür ermittelt.

In analoger Art und Weise werden die Bilddaten in dem Schritt 302.2 mit Hilfe des vorgegebenen Bewegungsprofils B entzerrt und in dem Schritt 304.2 wird eine OCR auf der Basis der mit dem Bewegungsprofil B entzerrten Bilddaten durchgeführt und ein globaler Vertrauenswert B ermittelt.

In dem Schritt 306 wird dasjenige der Bewegungsprofile A und B ausgewählt, welches einen höheren globalen Vertrauenswert liefert. Ausgehend von dem in dem Schritt 306 ausgewählten Bewegungsprofil wird dann in dem Schritt 308 das Optimierungsverfahren durchgeführt, durch welches das ausgewählte Bewegungsprofil iterativ geändert wird, um den globalen Vertrauenswert zu maximieren.

Ein solches Optimierungsverfahren kann beispielsweise wie folgt durchgeführt werden, wenn die Bewegungsprofile A und B jeweils in Form eines einzigen Bewegungsprofilparameters v bzw. a vorliegen:
In dem Schritt 310 wird der Bewegungsprofilparameter des ausgewählten Bewegungsprofils um einen vorgegebenen Betrag vergrößert. Daraufhin werden die Bilddaten in dem Schritt 312 auf der Basis des so geänderten Bewegungsprofils erneut entzerrt und in dem Schritt 314 werden die in dem Schritt 312 entzerrten Bilddaten einer OCR unterzogen und hierfür ein Vertrauenswert bezogen auf die erfassten Zeichen ermittelt.

In dem Schritt 316 wird geprüft, ob dieser Vertrauenswert über dem Vertrauenswert der vorherigen Iteration liegt. Wenn es sich bei der aktuellen Iteration um die erste Iteration handelt, wird geprüft, ob der Vertrauenswert dieser Iteration größer ist als der in dem Schritt 304.1 bzw. 304.2 gelieferte Vertrauenswert. Wenn dies der Fall ist wird zu dem Schritt 310 zurückgegangen, um den Bewegungsprofilparameter erneut zu erhöhen. Ist das Gegenteil der Fall, wird in dem Schritt 318 die zuvorige Vergrößerung des Bewegungsprofilparameters rückgängig gemacht und stattdessen der Bewegungsprofilparameter um einen vorgegebenen Wert verkleinert. Danach wird von dem Schritt 318 zu dem Schritt 312 zurückgegangen.

Dieses iterative Verfahren wird so lange durchgeführt bis der in dem Schritt 314 ermittelte Vertrauenswert einen Schwellwert erreicht oder eine Abbruchbedingung erfüllt ist. Die Abbruchbedingung kann beispielsweise eine maximale Anzahl von Iterationen sein.

Nach der Durchführung des Optimierungsverfahrens in dem Schritt 308 erfolgt in dem Schritt 310 eine Aufteilung der Bilddaten in Abschnitte. Nachfolgend wird für jeden dieser Abschnitte das Optimierungsverfahren in dem Schritt 308 abschnittsweise durchgeführt, um die Qualität der optischen Zeichenerfassung abschnittsweise weiter zu verbessern. Als Bewertungsfunktion dient dann in dem Schritt 314 jeweils der für einen Abschnitt der Bilddaten gelieferte lokale Vertrauenswert, welcher sich auf die von diesem Abschnitt erkannten Zeichen bezieht.

In dem Schritt 312 werden nach Durchführung des Optimierungsverfahrens für sämtliche der Abschnitte die erkannten Zeichen ausgegeben.

### Bezugszeichenliste

- 100: Scanner
- 102: Zeilenkamera
- 104: Speicher
- 106: Bewegungsprofil
- 108: geändertes Bewegungsprofil
- 110: Bilddaten
- 112: entzerrte Bilddaten
- 113: Prozessor
- 114: Programmmodul
- 115: Programmmodul
- 116: Programmmodul
- 118: Computer
- 120: Anwendungsprogramm
- 122: Dokument
- 124: Passbild
- 126: Textfeld
- 128: MRZ
- 130: Programmmodul
- 132: Programmmodul
- 134: Abschnitt

## Patentansprüche

1. Verfahren zur automatischen optischen Zeichenerfassung von einem Dokument (122) mit folgenden Schritten:
- Manuelles Einscannen zumindest eines Teilbereichs (128) des Dokuments, der Zeichen trägt, mittels einer Zeilenkamera (102), wobei eine unkontrollierte Relativbewegung des Dokuments und der Zeilenkamera durchgeführt wird, wodurch Bilddaten (110) von zumindest dem Teilbereich erfasst werden, wobei keine Synchronisierung der Relativbewegung mit der Abtastfrequenz der Zeilenkamera stattfindet,
- jeweils Entzerrung der Bilddaten mit Hilfe eines ersten vorgegebenen Bewegungsprofils (106') und Entzerrung der Bilddaten mit Hilfe eines zweiten vorgegebenen Bewegungsprofils (106") der Relativbewegung des Dokuments und der Zeilenkamera,
- jeweils Durchführung einer optischen Zeichenerkennung in den entzerrten Bilddaten (112), wobei jeweils ein globaler Vertrauenswert für die Korrektheit der erkannten Zeichen ermittelt wird, wobei der globale Vertrauenswert ein Maß für die Zuverlässigkeit der Zeichenerkennung bezogen auf die in den entzerrten Bilddaten insgesamt erkannten Zeichen und nicht bezogen auf einzelne Zeichen ist,
- iterative Änderung desjenigen Bewegungsprofils, welches den größten globalen Vertrauenswert liefert, wobei bei jeder Iteration die Entzerrung der Bilddaten mit dem geänderten Bewegungsprofil und die Zeichenerkennung durchgeführt wird, und wobei die iterative Änderung nach einem Optimierungsverfahren zur Maximierung des globalen Vertrauenswerts erfolgt,
wobei jedes der Bewegungsprofile einen einzigen Bewegungsprofilparameter aufweist, wobei der Bewegungsprofilparameter des einen der Bewegungsprofile, welches für die iterative Änderung ausgewählt wurde, geändert wird.

2. Verfahren nach Anspruch 1, wobei das erste Bewegungsprofil eine konstante Beschleunigung aufweist.

3. Verfahren nach Anspruch 2, wobei die Beschleunigung die Erdbeschleunigung ist.

4. Verfahren nach Anspruch 1, 2 oder 3, wobei das zweite Bewegungsprofil eine konstante Geschwindigkeit aufweist.

5. Verfahren nach einem der vorhergehenden Ansprüche, wobei die iterative Änderung des Bewegungsprofils beendet wird, sobald eine Abbruchbedingung erreicht wird, mit folgenden weiteren Schritten:
- Aufteilung zumindest des Teilbereichs in Abschnitte (134),
- abschnittsweise iterative Änderung des Bewegungsprofils ausgehend von dem durch die Anwendung des Optimierungsverfahrens zur Maximierung des globalen Vertrauenswerts erhaltenen Bewegungsprofils, wobei bei jeder Iteration bezüglich eines der Abschnitte die Entzerrung der Bilddaten dieses Abschnittes mit dem geänderten Bewegungsprofil dieses Abschnitts und die Zeichenerkennung durchgeführt wird, wobei die iterative Änderung des Bewegungsprofils in dem Abschnitt nach einem Optimierungsverfahren zur Maximierung des lokalen Vertrauenswerts in dem betreffenden Abschnitt erfolgt.

## Claims

1. A method for automatically identifying optical characters in a document (122) comprising the following steps:
- manually scanning at least one sub-area (128) of the document, which bears characters, by means of a line-scan camera (102), wherein an uncontrolled relative movement of the document and of the line-scan camera is performed, whereby image data (110) of at least the sub-area is captured, wherein there is no synchronisation of the relative movement with the sampling frequency of the line-scan camera,
- rectifying the image data with the aid of a first predefined movement profile (106') and rectifying the image data with the aid of a second predefined movement profile (106") of the relative movement of the document and the line-scan camera,
- identifying optical characters in the rectified image data (112), wherein a global confidence value for the correctness of the identified characters is established, wherein the global confidence value is a measure for the reliability of the character identification on the basis of the characters identified as a whole in the rectified image data and not on the basis of individual characters,
- iteratively changing the movement profile supplying the greatest global confidence value, wherein, with each iteration, the image data is rectified with the changed movement profile and characters are identified, and wherein the iterative change occurs in accordance with an optimisation method for maximising the global confidence value,
wherein each of the movement profiles has a single movement profile parameter, wherein the movement profile parameter of one of the movement profiles that has been selected for the iterative change is changed.

2. The method according to Claim 1, wherein the first movement profile has a constant acceleration.

3. The method according to Claim 2, wherein the acceleration is the gravitational acceleration.

4. The method according to Claim 1, 2 or 3, wherein the second movement profile has a constant speed.

5. The method according to one of the preceding claims, wherein the iterative change of the movement profile is ended as soon as an abortion condition is reached, comprising the following steps:
- dividing at least the sub-area into portions (134),
- iteratively changing, in portions, the movement profile starting from the movement profile obtained by applying the optimisation method for maximising the global confidence value, wherein, with each iteration in respect of one of the portions, the image data of this portion is rectified with the changed movement profile of this portion and characters are identified, wherein the iterative change of the movement profile in this portion is implemented in accordance with an optimisation method for maximising the local confidence value in the portion in question.

## Revendications

1. Procédé pour la reconnaissance optique automatique de caractères d'un document (122) avec les étapes suivantes :
- numérisation manuelle d'au moins une région partielle (128) du document portant des caractères, au moyen d'une caméra linéaire (102), dans laquelle est effectué un mouvement relatif incontrôlé du document et de la caméra linéaire, par lequel sont reconnues des données d'image (110) d'au moins la région partielle, dans laquelle aucune synchronisation du mouvement relatif avec la fréquence d'échantillonnage de la caméra linéaire n'a lieu,
- égalisation respective des données d'image à l'aide d'un premier profil de mouvement prédéfini (106¹), et égalisation des données d'image à l'aide d'un deuxième profil de mouvement prédéfini (106") du mouvement relatif du document et de la caméra linéaire,
- exécution respective d'une reconnaissance optique de caractères dans les données d'image égalisées (112), dans laquelle une valeur de confiance globale est calculée respectivement pour l'exactitude des caractères reconnus, dans laquelle la valeur de confiance est une mesure pour la fiabilité de la reconnaissance de caractères, par rapport à l'ensemble des caractères reconnus dans les données d'images égalisées et non par rapport à des caractères individuels,
- modification itérative du profil de mouvement présentant la valeur de confiance la plus élevée, dans laquelle l'égalisation des données d'image avec le profil de mouvement modifié et la reconnaissance de caractères sont effectuées à chaque itération, et dans laquelle la modification itérative est effectuée suite à un procédé d'optimisation pour la maximisation de la valeur de confiance globale,
dans lequel chacun des profils de mouvement comporte un paramètre unique de profil de mouvement, dans lequel le paramètre de profil de mouvement de l'un des profils de mouvement sélectionné pour la modification itérative est modifié.

2. Procédé selon la revendication 1, dans lequel le premier profil de mouvement présente une accélération constante.

3. Procédé selon la revendication 2, dans lequel l'accélération est l'accélération de la pesanteur.

4. Procédé selon la revendication 1, 2 ou 3, dans lequel le deuxième profil de mouvement présente une vitesse constante.

5. Procédé selon l'une des revendications précédentes, dans lequel la modification itérative du profil de mouvement est terminée dès qu'une condition d'interruption est atteinte, avec les étapes supplémentaires suivantes :
- division d'au moins la région partielle en sections (134),
- modification itérative par sections du profil de mouvement à partir du profil de mouvement obtenu par l'application du procédé d'optimisation pour la maximisation de la valeur de confiance globale, dans laquelle l'égalisation des données d'image de cette section avec le profil de mouvement modifié de cette section et la reconnaissance de caractères sont effectuées à chaque itération relative à l'une des sections, dans laquelle la modification itérative du profil de mouvement dans la section est effectuée selon un procédé d'optimisation pour la maximisation de la valeur de confiance locale dans la section concernée.
